# EUROPEAN PATENT APPLICATION

(11) **EP 4 804 476 A1**
(43) Date of publication of application: **09.09.2026**
(21) Application number: 25305308.6
(22) Date of filing: 07.03.2025
(51) Int. Cl.: H04L 41/5009, H04L 41/5025, H04L 41/5067, H04L 43/0811, H04L 43/0864, H04L 41/50

(54) **RAN-AWARE METHOD FOR XR ROUNDTRIP DELAY ADJUSTMENTS**

(71) Applicant: InterDigital CE Patent Holdings, SAS, 75017 Paris (FR)
(72) Inventor: HIRTZLIN, Patrice, 35830 BETTON (FR); FAIVRE D'ARCIER, Etienne, 35750 SAINT GONLAY (FR); PERIARD, Francois, MONTREAL, H3T IL7 (CA); HUDON, Mario, BROSSARD, J4Z 0T7 (CA); FONTAINE, Loic, 35530 NOYAL SUR VILAINE (FR); JOUET, Pierrick, 35000 RENNES (FR); LELIEVRE, Sylvain, 35760 MONTGERMONT (FR); MULARD, Julien Pierre Henri Philippe, 35000 RENNES (FR); LEROY, Bertrand, 35170 BRUZ (FR); BAUDOIN, Thomas, 53240 ANDOUILLE (FR)
(74) Representative: Vossius & Partner Patentanwälte Rechtsanwälte mbB

(57) **Abstract**

In some implementations, a method may include configuring a roundtrip delay adjustment mechanism including at least one of different QoE levels defined for each flexible object, dependency information between a QoE level of flexible objects, an adjustment strategy, or adjustment criteria. In addition, the method may include receiving a notification from a Radio Access Network (RAN) indicating a reduction in RAN connectivity where RAN connectivity may include RAN conditions or RAN capacity. The method may include determining a first appropriate set of QoE levels based on the configured adjustment criteria, where the first appropriate set of QoE levels includes a respective QoE level for each flexible object. In addition, the method may include measuring at least one roundtrip delay and at least one elementary task processing delay including calculating the at least one roundtrip delay based on several samples after determining RAN connectivity is returned to an acceptable level.

## Description

### BACKGROUND

Extended Reality (XR) is an umbrella term that includes Virtual Reality (VR), Augmented Reality (AR), and Mixed Reality (MR). An XR device is a device that operates by blending the physical world and digital worlds using a combination of hardware and software. XR devices may connect to a network via WiFi, cellular networks including LTE, 5G, and 6G, Bluetooth, or a wired connection, for example USB or Ethernet. XR devices rely on real-time data exchange for cloud processing and streaming, edge computing, and content streaming, for example. Real-time XR video is transmitted frame-by-frame and requires low latency being highly sensitive to network fluctuations. Compression techniques and adaptive streaming may be used to enhance a user's experience. Quality of Experience (QoE) is s a measure of how well an XR application performs. QoE may have associated metrics that are maintained within configured ranges. As XR develops and appeals to more users, the need exists for technological solutions to maintain an acceptable QoE when there are abrupt or sudden changes in the cellular networks.

### SUMMARY

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In one general aspect, a method may include configuring a roundtrip delay adjustment mechanism including at least one of different QoE levels defined for each flexible object, dependency information between a QoE level of flexible objects, an adjustment strategy, or adjustment criteria. The method may also include receiving a notification from a Radio Access Network (RAN) indicating a reduction in RAN connectivity where RAN connectivity may be reduces due to RAN conditions or RAN capacity. The method may furthermore include determining a first appropriate set of QoE levels based on the adjustment criteria, where the first appropriate set of QoE levels includes a respective QoE level for each flexible object. Other embodiments of this aspect include corresponding computer systems, apparatus, and computer programs recorded on one or more computer storage devices, each configured to perform the actions of the methods.

Implementations may include one or more of the following features. The method may include: determining the RAN connectivity is restored to an acceptable level. The method where the adjustment criteria includes: a first set of QoE levels of objects and a second set of QoE levels of objects, where the first appropriate set of QoE levels is at least one of the first set of QoE levels of objects or the second set of QoE levels of objects, and where the first set of QoE levels of objects is implemented when the notification from the RAN is received, and where the second set of QoE levels of objects is implemented when determining RAN connectivity is restored to an acceptable level. The method may include decreasing QoE levels of objects by a first preconfigured value when the notification from the RAN indicating the reduction in RAN connectivity is received, and increasing the QoE level of objects by a second preconfigured value when determining RAN connectivity is returned to an acceptable level, where the first preconfigured value and the second preconfigured value are the same or distinct. The method may include: reconciling current QoE levels of objects at a device hosting the XR application with QoE levels of objects hosted on an application server upon determining the RAN connectivity is restored to an acceptable level. The method where the roundtrip delay adjustment mechanism includes a prohibit timer indicating an active duration, and where the active duration is a time value during which changes to QoE levels of objects based on round trip delay measurements are prohibited after the notification from the RAN is received and the prohibit timer is activated. The method may include: measuring at least one roundtrip delay and at least one elementary task processing delay including calculating the at least one roundtrip delay based on several samples after determining RAN connectivity is returned to an acceptable level or upon expiration of the prohibit timer; and determining a second appropriate set of QoE levels based on a QoE map and the configured roundtrip delay adjustment mechanism. Implementations of the described techniques may include hardware, a method or process, or a computer tangible medium.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 illustrates an exemplary MPEG scene description architecture;
FIG. 3 illustrates an example of a rendering loop for visual data;
FIG. 4 illustrates a method for adjusting the XR roundtrip delay;
FIG. 5 illustrates a plot of the adjusted XR roundtrip delay of the method of FIG. 4;
FIG. 6 illustrates a graph-based method to handle rendering qualities;
FIG. 7 illustrates an initial set of QoE levels per object;
FIG. 8 illustrates a method for determining a set of QoE levels;
FIG. 9 illustrates a block diagram of an embodiment of video encoder in which various aspects of the embodiments may be implemented;
FIG. 10 illustrates a block diagram of an embodiment of video encoder in which various aspects of the embodiments may be implemented;
FIG. 11 illustrates a block diagram of a system within which aspects of the present embodiments may be implemented; and
FIG. 12 illustrates a flowchart of an example process for adjusting roundtrip delay in an XR application.

### DETAILED DESCRIPTION

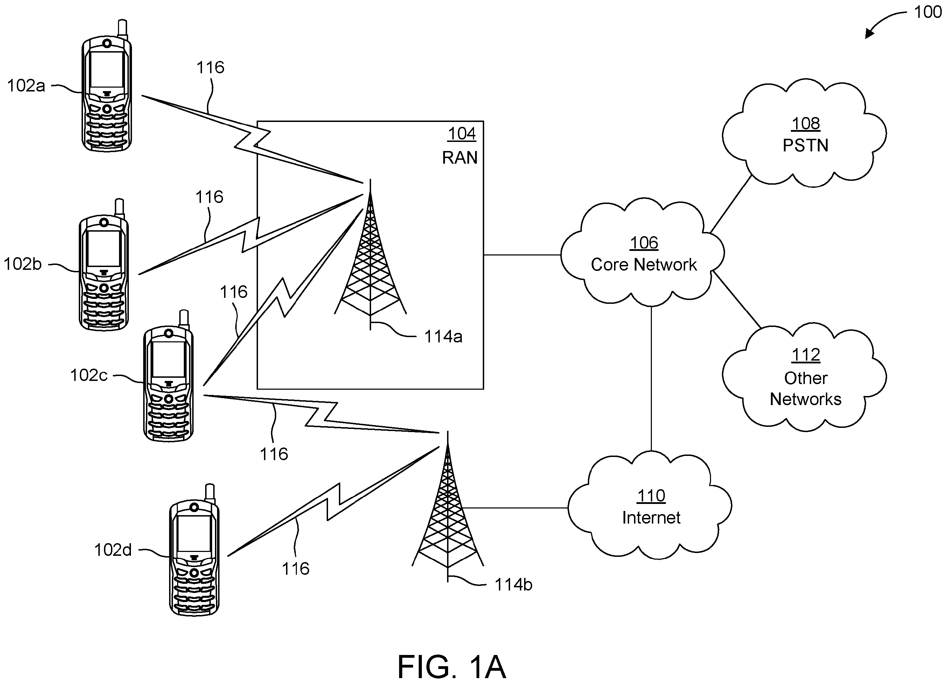

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the \PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

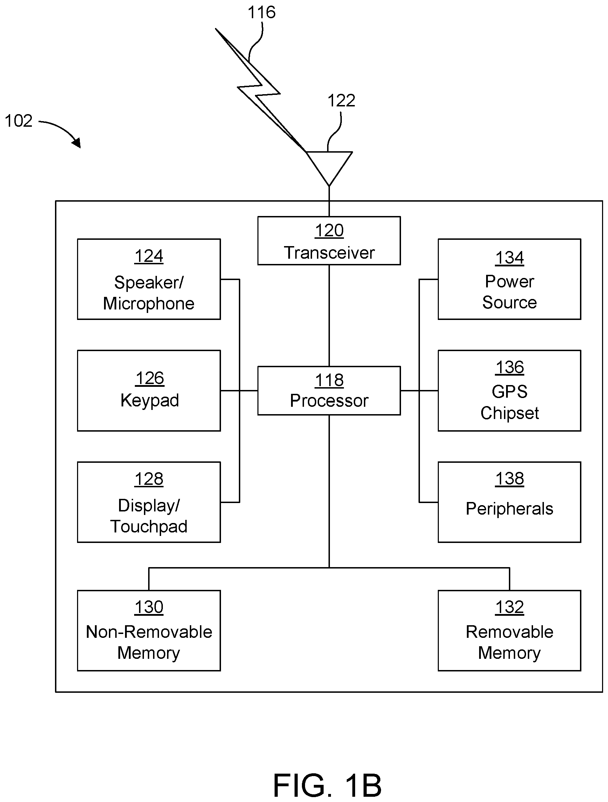

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

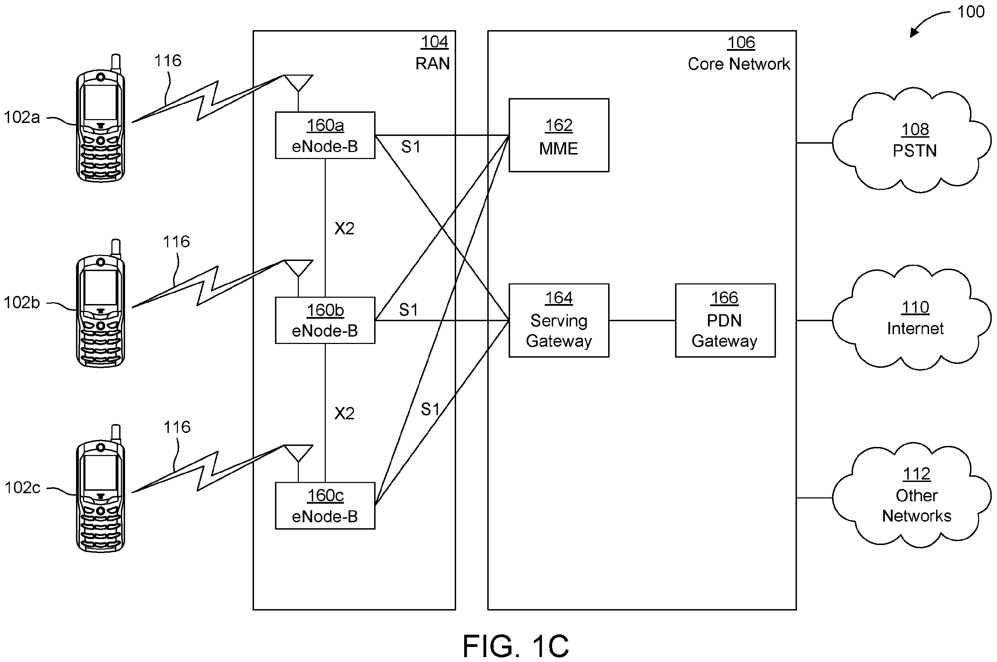

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The **MME** 162 may be connected to each of the eNode-Bs 162a, 162b, 162c in the RAN 104 via an S1 interface and may serve as a control node. For example, the **MME** 162 may be responsible for authenticating users of the WTRUs 102a, 102b, 102c, bearer activation/deactivation, selecting a particular serving gateway during an initial attach of the WTRUs 102a, 102b, 102c, and the like. The **MME** 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

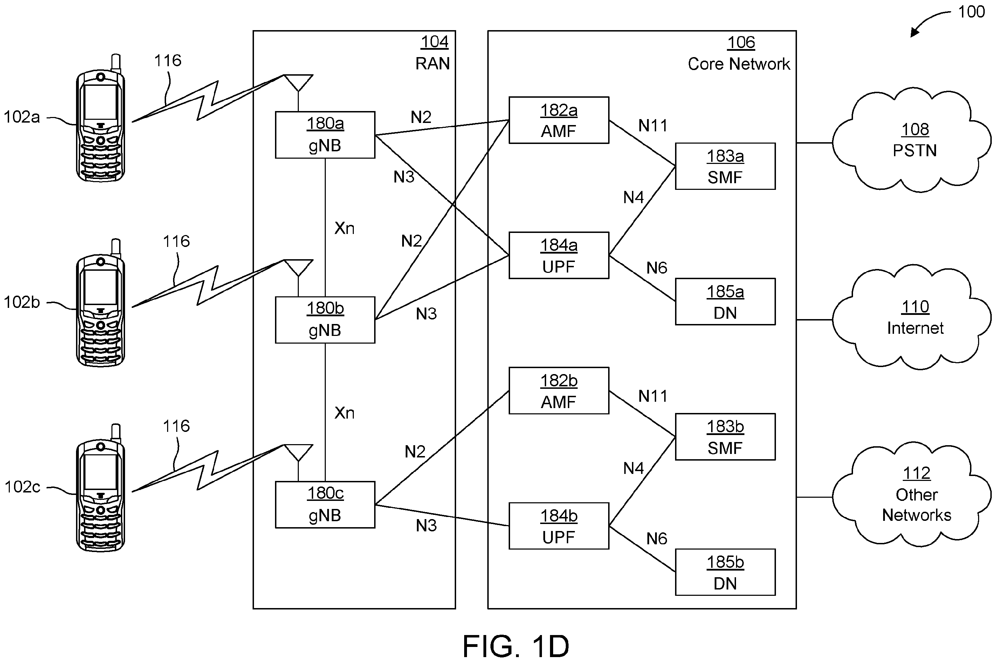

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184a, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, **MME** 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

A rendering/presentation engine (e.g., a game engine such as Unity, Unreal Engine, etc.) may be used to compose and render a scene. The information used to compose and render the scene, generally referred to as scene information, may be provided by a scene description. One of the scene description formats is Khronos' gITF. gITF is a JSON-based file format that provides a mechanism to refer to external binary and image file(s). gITF supports static media objects including some forms of dynamicity using animation. MPEG has generally incorporated gITF as a scene graph format and extended gITF to support dynamic (timed) content such as 2D and 360-degree videos, dynamic volumetric visual media, and audio.

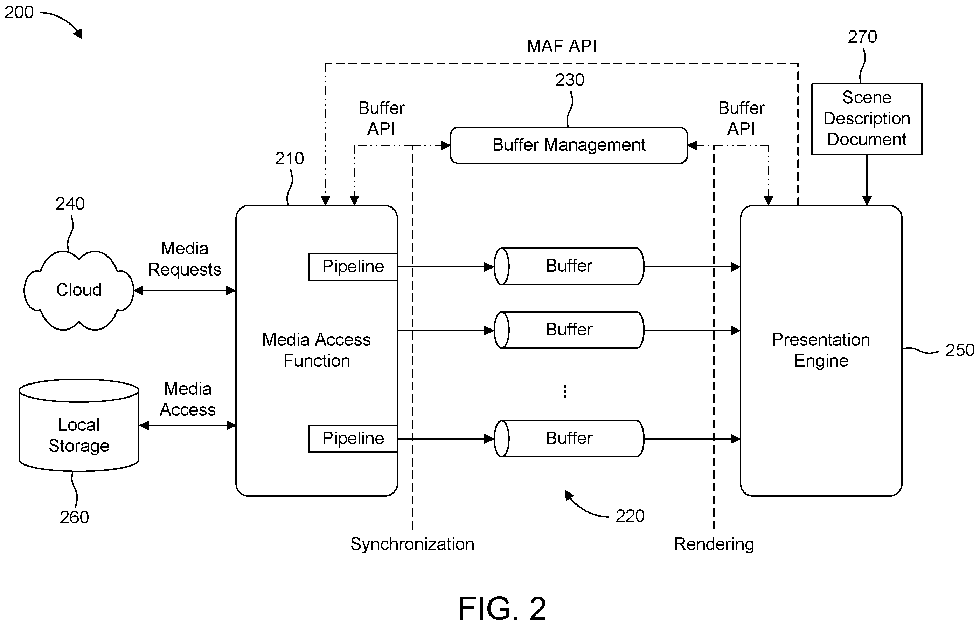

FIG. 2 illustrates an exemplary MPEG scene description architecture 200. There are two main entities in the MPEG-I scene description architecture 200: the media access function (MAF) 210 and the presentation engine (PE) 250. The foundational consideration for the reference architecture 200 is to decouple the functionality of the MAF 210 from the rendering and presentation of PE 250. MAF 210 is responsible for requesting, fetching, decoding, and post-processing the media data required by the PE 250 to render the various media objects that are part of the scene. MAF 210 is expected to present the media data in appropriate buffer formats in accordance with the scene description document 270 such that they are readable by PE 250. The scene description document 270 is loaded by PE 250 and scene description document 270 identifies from the relevant buffers for each media object in the scene and their formats.

MAF 210 communicates with cloud 240 to request media. These media requests may occur in either direction. MAF 210 communicates with local storage 260 to gain access to media. These media access may occur in either direction. MAF 210 builds the media pipeline for rendering and uses a series of buffers 220 to do so. Buffer management 230 is configured to operate between the PE 250 and MAF 210 to provide media that is synchronized for rending. PE 250 receives the media in a synchronized form from the MAF 210 via buffers 220 controlled by buffer management 230 and renders the scene.

The delays and latencies in an XR application may impact the quality of experience (QoE) of the XR application (e.g., ensure a high QoE). Different XR roundtrip delays may be involved in an XR application. For example, a motion-to-photon latency may be less than 20ms. As another example, a roundtrip interaction delay may be as small as 50-60ms. A rendering loop of an XR application may be used to measure latency for the QoE metric. The rendering loop may be a component of an XR application. The rendering loop may generate the images that are displayed to the user. Information related to latencies may be collected. The rendering loop of an XR Runtime may need to be understood (e.g., to collect the information related to latencies).

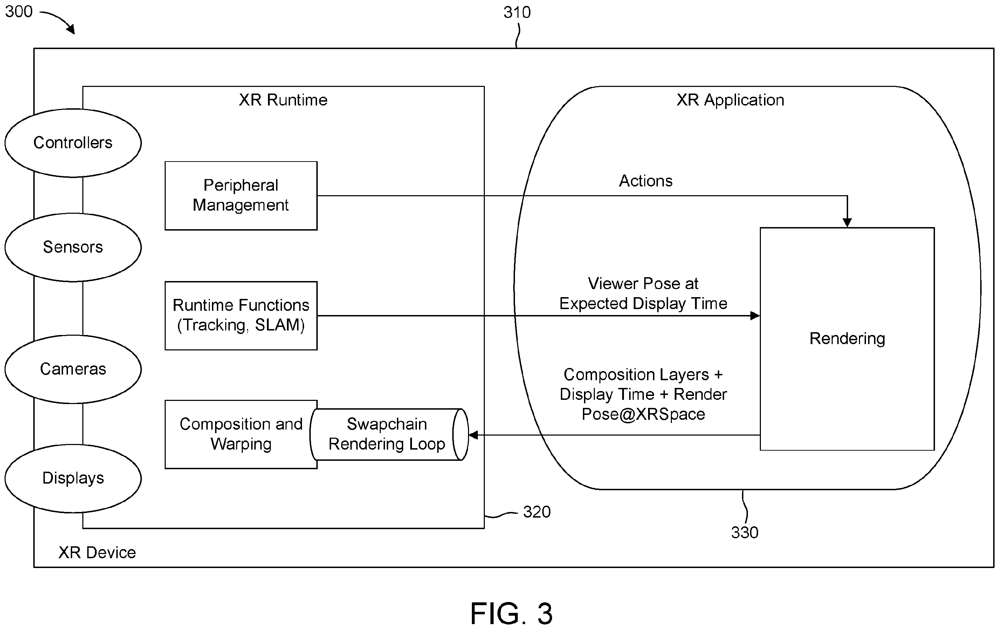

FIG. 3 illustrates an example 300 of a rendering loop for visual data that may occur within an XR device 310. The rendering loop may be used if a session is running and is in a focused state. An XR application 330 may wait on a swapchain image (e.g., before the application begins writing to the swapchain image) to avoid writing to the swapchain image before the compositor has finished reading from the swapchain image. XR application 330 may synchronize its rendering loop to a XR Runtime 320. If XR application 330 has pipelined frame submissions, XR application 320 may compute a target display time. For example, XR application 330 may compute the target display time using a predicted display time and a predicted display interval (e.g., both the predicted display time and the predicted display interval).

XR application 330 may initiate the rendering process (e.g., after the wait time is complete). XR application 330 may render different views. XR Runtime 320 may provide access to viewer pose and projection parameters (e.g., that may be used to render the different views). The view and projection information may be provided for a display time within a specified XR space. The target/predicted display time may be for a given frame.

XR application 330 may perform rendering work. Rendering work may involve copying (e.g., directly copying) data from the application into the swapchain. The rendering work may involve iterating over the scene graph nodes and rendering complex objects. If the views/layers (e.g., all views/layers) are rendered, the application may send the views/layers to XR Runtime 320 for compositing (e.g., final compositing). The application may include (e.g., also send) the expected display time and the associated render pose.

The XR application may offload the composition of the final image to an XR Runtime-supplied compositor. The compositor may blend and flatten the layers (e.g., all layers). The compositor may present this image (e.g., with the blended and flattened layers) to the system's display at a specific display time.

Feature(s) associated with metrics computation are provided herein. The time difference between sampling of the view and projection information from the Runtime and providing the corresponding rendered information to the Runtime for display with the associated render pose may be computed. The difference between the associated render pose and the actual pose at the time when the data is rendered may be computed.

The rendering loop may include a (e.g., single) rendering processing module. The rendering processing module may take as inputs the actions and the viewer pose to render a three-dimensional (3D) scene.

XR application 330 may consider a change/modification of the virtual objects by updating the related scene graph (e.g., before rendering the 3D scene from the viewer pose). The update operation may include a potential physics simulation. The update operation may handle interactivity events (e.g., trigger activation, launching of actions, etc.). The update operation may be time-consuming. The duration of the update operation may vary from one rendering frame to another.

The scene update step and the rendering processing step for the delay measurement may be distinguished. The distinction may improve the QoE of XR application 330. XR application 330 may be able to perform a (e.g., proper) latency adjustment strategy on the steps (e.g., each of the two steps) to improve the XR roundtrip delays (e.g., such as the motion-to-photon or the roundtrip interaction delay).

Measuring the latency of a processing step (e.g., each processing step) of the rendering loop may involve adding observation points to collect measurements. The configuration of a stage (e.g., each of these stages) may be adjusted (e.g., to ensure that XR application 330 provides a high quality of user experience).

The adjustment may be based on different configuration levels (e.g., that modify quality mode and resource consumption). If the delay of the processing step has been measured, the application may switch between levels (e.g., to stay in a target range of the processing delay).

A separation between the scene update and the rendering may be introduced. The steps of the rendering loop may be modified. For example, observation points (OPs) may be used to collect measurements. Feature(s) associated with proper delay adjustment are provided herein.

The scene update may be introduced (e.g., added) to the rendering loop.

Scene update may involve updating the 3D scene graph based on the current state of the application. The scene update may involve performing one or more of the following tasks (e.g., to maintain an up-to-date representation of the scene): updating the background texture with an image captured by a camera for video see-through displays; adding/removing objects to/from the scene; updating the pose of the virtual viewpoint according to the viewer pose estimation; updating the pose of a virtual objects according to physics simulation, defined animations, runtime interactions, and/or the pose estimation of an augmented reality (AR) anchor; updating the occlusion mask with the 3D reconstruction of the real space for AR application 330; updating the properties of an object (e.g., the object's color, size, etc.) based on runtime interactivity; and/or provisioning the scene for rendering or updating the complexity of the scene according to 3D rendering performances.

Scene rendering may involve the (e.g., actual) 3D rendering of the scene. The system may generate images of the visible objects in the scene. The system may apply various visual effects (e.g., lighting and shadows). The system may generate a final image that is ready to be displayed to the user.

The update of the scene graph the rendering loop may involve displaying the rendered image on the device's display. The system may perform additional post-processing may occur at the beginning of the rendering loop (e.g., before the rendering stages take place).

The present system and method provides a mechanism to adjust roundtrip delays of an Extended Reality (XR) application while maintaining an acceptable Quality of Experience (QoE). The mechanism of roundtrip delay adjustment is configured with one or more sets of QoE levels defined in the graph representation of the XR scene and with an adjustment strategy. The measured scene task processing delays with these QoE levels are stored in a QoE map allowing an optimal roundtrip delay adjustment for a wide variety of XR devices. The method is includes configuring the roundtrip delay adjustment mechanism, measuring the roundtrip delay and the elementary task processing delays, and determining the appropriate set of QoE levels based on the QoE map and the configured adjustment strategy. This method may advantageously be used by a Scene Manager, i.e., the functional entity of the device (User Equipment or Application Server) in charge of updating the XR scene before the rendering process.

A method for measurement and adjustment of XR roundtrip delay includes a method for measurement and adjustment of XR roundtrip delay. For each processing step of the rendering loop, the method switches to the proper QoE level based on the comparison between the measured processing delay measurement and the related pre-defined minimum and maximum processing delay thresholds to meet the end-to-end XR roundtrip delay. In addition, a method of a roundtrip delay adjustment mechanism includes determining an appropriate set of QoE levels when notified of a sudden reduction of RAN connectivity.

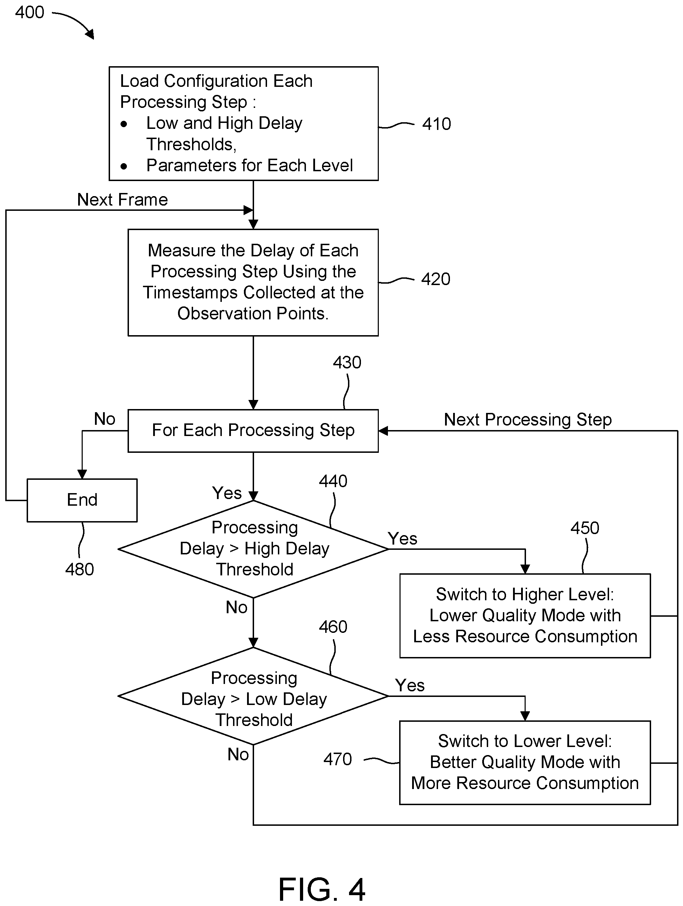

FIG. 4 illustrates a method 400 for adjusting the XR roundtrip delay. Method 400 includes loading the configuration for each processing step including low and high delay threshold and parameters for each level at 410. At 420, method 400 includes measuring the delay of each processing step using the timestamps collected at the observation points. Then at 430, for each processing step, method 400 includes determining if the processing delay is greater than a high delay threshold at 440. If the determination at 440 is "yes," then method 400 includes at 450 switching to a higher level, low quality mode with less resource consumption and returning to 430 for the next processing step. If the determination at 440 is "no," then method 400 includes at 460 determining if the processing delay is less than a low delay threshold. If the determination at 440 is "yes," then method 400 includes at 470 switching to a lower level, better quality mode with more resource consumption and returning to 430 for the next processing step. If the determination at 460 is "no," then method 400 returns to 430 for the next processing step. Once the processing steps are completed via 430, method 400 ends at 480.

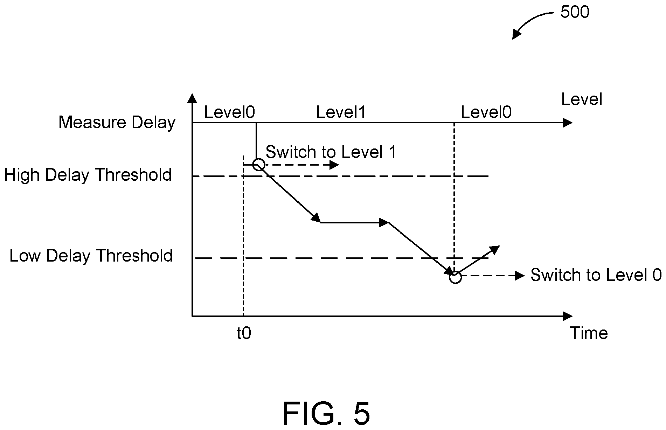

FIG. 5 illustrates a plot 500 of the adjusted XR roundtrip delay of method 400 of FIG. 4. In FIG. 5, the measurement delay is provided on the Y-axis. A high delay threshold and a low delay threshold are illustrated. Time is provided on the X-axis. Progression from Level 0 to level 1 and back to level 0 is illustrated. Initially as the level is above a high delay threshold, a change from level 0 to level 1 occurs. Then as the level falls below the low delay threshold, a change from level 1 back to level 0 occurs.

Method 400 for the adjustment of XR roundtrip delays of FIG. 4 and FIG. 5 is based on a single set of QoE levels for each processing step. The adjustment algorithm switches to the lower or higher QoE level with respect to the current QoE level based on the measurement of the current roundtrip delay. Method 400 may have limitations including the combination of object characteristics (e.g., geometry and/or texture information) into each QoE level is defined once, prior to runtime. This static set of QoE levels may provide limited or no flexibility at runtime to optimize the delay adjustments. For example, the increase/decrease of the delay between each QoE level depends on the XR device (e.g., processing capabilities) and may not be significant/relevant.

Method 400 may account for an already-measured task processing delay of a previously selected QoE level to converge to the optimal QoE level.

Method 400 may be unstable as the adjustment is performed for each rendering frame leading to be quite sensitive to any ephemeral perturbation (e.g., interruption process of multi-core CPU). There is a need to configure a measurement time window to obtain a good trade-off between stability and reactiveness.

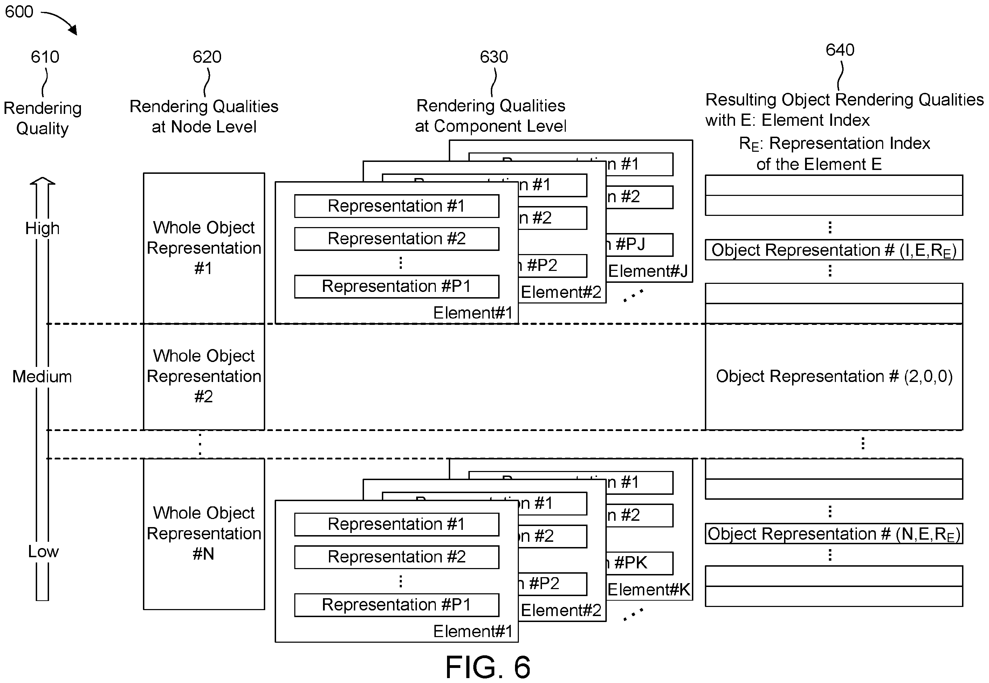

FIG. 6 illustrates a graph-based method 600 to handle rendering qualities. Specifically, method 600 handles object rendering qualities 610 in a scene graph representation based on pre-defined criteria by rendering qualities at the node level 620, rendering qualities at component level 630 and providing the resultant object rendering qualities 640. Among the possible criteria, a delay criteria may be used to select the object rendering qualities based on their provided delay thresholds. Object rendering qualities and their corresponding thresholds may be pre-defined in the graph representation of the XR scene.

The graph-based method to handle rendering qualities of FIG. 6 provides a set of QoE levels for each object. Method 600 may have limitations including that the threshold values may need to be provided for each QoE level prior to runtime and this providing may prove difficult when considering processing delay as an evaluation criteria and these delay values may be strongly dependent to the type of XR device and its CPU/GPU processing capabilities.

The system and method are configured to adjust roundtrip delays for a wide variety of XR devices by overcoming the deficiencies found in the methods of FIG. 4 and FIG. 6, for example. The system and method are configured to adjust roundtrip delays of an Extended Reality (XR) application while maintaining an acceptable Quality of Experience (QoE). The mechanism of roundtrip delay adjustment is configured with one or more sets of QoE levels defined in the graph representation of the XR scene and with an adjustment strategy. The measured scene task processing delays of these QoE levels are stored in a QoE map allowing an optimal roundtrip delay adjustment for a wide variety of XR devices. The system and method may be used by a scene manager, i.e., the functional entity of the device (User Equipment or Application Server) in charge of updating the XR scene before the rendering process.

A method of adjusting roundtrip delays for an XR application may include configuring a roundtrip adjustment mechanism, measuring the roundtrip delays and the elementary task processing delays, and determining the appropriate set of QoE levels based on the QoE map and the configurated adjustment strategy.

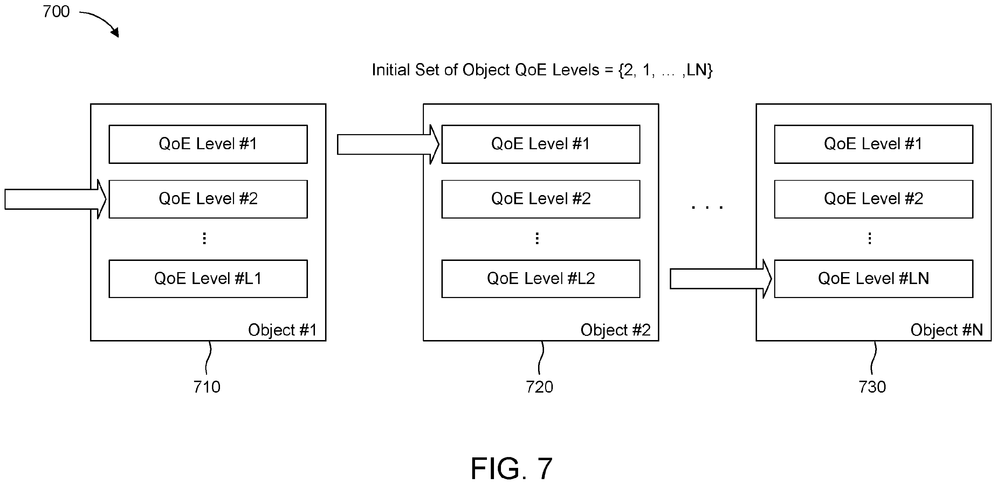

FIG. 7 illustrates an initial set 700 of QoE levels per object. The initial set of QoE levels per object to be used at the beginning of the XR session for the first rendering frames may be provided at the initiation of the XR session, for example. If no initial set of QoE levels per object is provided, the application may select the QoE level exhibiting the lowest processing delay for each flexible object to be used for the first rendering frames. The available QoE levels per object may be provided in an array with an increasing processing delay order.

As illustrated in FIG. 7, the initial set 700 may include a set of QoE levels 710 for object #1 that includes QoE level #1, QoE level #2 ... QoE level #L1 for object #1, a set of QoE levels 720 for object #2 that includes QoE level #1, QoE level #2 ... QoE level #L2 for object #2, ..., and a set of QoE levels 730 for object #N that includes QoE level #1, QoE level #2 ... QoE level #LN for object #N. The initial set of QoE levels per objects of FIG. 7 is QoE level #L2 for object 1, QoE level #L1 for object 2,..., and QoE level #LN for object N.

An adjustment criteria information to guide the application of determining the next set of QoE levels per object when more than one flexible object are defined in the XR scene. A resulting adjustment may be, for example, based on the viewing distance criteria, by increasing the QoE level (i.e., by increasing the processing delay) for close object(s) if the measured delay is below the delay metric and by decreasing the QoE level (i.e., by decreasing the processing delay) for far object(s) if the measured delay is above the delay metric. This adjustment may also be, for example, based on the screen coverage criteria, by increasing the QoE level (i.e., by increasing the processing delay) for object(s) having larger screen coverage if the measured delay is below the delay metric and by decreasing the QoE level (i.e., by decreasing the processing delay) for object(s) having smaller screen coverage if the measured delay is above the delay metric may be provided as a string/text or enumerator parameter.

Adjustment determination information minimum and maximum delay values defining an acceptable delay range around the target roundtrip delay in which no delay adjustment is required may include the periodicity of the adjustment, the time window or the number of delay measurement samples to collect for averaging before making an adjustment decision.

The scene task processing delays associated to the sets of QoE levels per object may be available at the beginning of the XR session or after a calibration procedure (i.e., the application iterates on each object QoE level, measures and stores the related scene task processing delays in a QoE map).

In that case, a QoE map may be provided during the configuration step to guide the determination of the appropriate set of QoE levels per object, as discussed below, during the runtime.

An example of a QoE map for the task processing (e.g., rendering) delay for a XR scene having among others two flexible objects exhibiting 4 QoE levels (from 0 to 3) is provided in Table 1. Table 1 provides a QoE map storing the task processing delay of a scene having two flexible objects. The QoE level -1 corresponds to the case when the object is not processed (e.g., not in the view frustrum and not rendered).

**Table 1: QoE map storing the task processing delay of a scene having two flexible objects**

| QoE level object1 \ object 2 | -1 | 0 | 1 | 2 | 3 |
|---|---|---|---|---|---|
| -1 | 5ms | 6ms | 8ms | 11ms | 14ms |
| 0 | 7ms | 8ms | 11ms | 13ms | 19ms |
| 1 | 10ms | 12ms | 18ms | 22ms | 26ms |
| 2 | 15ms | 17ms | 23ms | 27ms | 35ms |
| 3 | 20ms | 25ms | 30ms | 32ms | 45ms |

Additional information may be provided with a QoE map for some processing tasks. For example, the camera intrinsic parameters, the viewing distance, and/or the screen coverage for each flexible object may be provided for the scene rendering as these parameters have a significant impact on the scene rendering delay.

The measurement of the roundtrip delays and the elementary task (e.g., update, rendering of the scene) processing delays may be done using the measurement method of FIG. 4 and FIG. 5. In the case when no QoE map was provided during the configuration step, the current scene task processing delay corresponding to the current set of QoE levels of flexible objects may be stored in the QoE map. An average/filtered delay value between several measurement samples may be calculated and stored to avoid instability. For example, an Exponential Moving Average (EMA) may be used for smoothing the time series, such as, measurements, also allowing adjustment on reactiveness, for example. EMA has the extra advantage that storing multiple measurements is not required, and only the last value (average) is retained.

Many object QoE level adjustments may be made to meet the target roundtrip delay constraints during the runtime. Therefore, the QoE map may be progressively filled on-the-fly during the runtime.

A time information may be provided to each stored delay values in the QoE map. The time information may provide an indication of how old this delay value was measured and may impact a confidence level. For example, old measurement values may no longer be relevant based on the type of XR application, and hence, need to be updated.

Even if a QoE map was provided during the configuration step, the method may decide or may be configured to update the scene task processing delay values of the QoE map by the current measured values. This update may be relevant for low-end XR devices having variable/non-stable task processing performances. For example, the processing delay may be increased due to temperature increase, or due to a low battery level.

This QoE map may guide the determination of the appropriate set of QoE levels per object during the runtime.

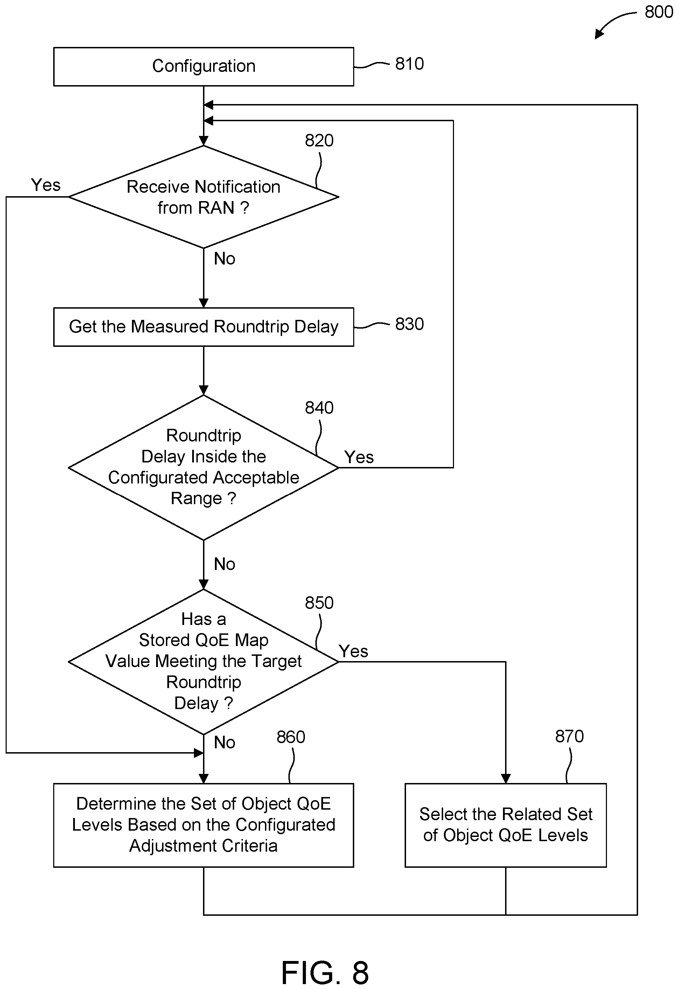

FIG. 8 illustrates a method 800 for determining a roundtrip delay when a notification is received from a RAN. The method may be implemented when it is possible to maintain an acceptable QoE, but radio conditions suffer from sudden or abrupt changes. At 810, a roundtrip delay adjustment mechanism is configured. The configured roundtrip delay adjustment mechanism may include at least one of different QoE levels defined for each flexible object, dependency information between a QoE level of flexible objects, an adjustment strategy, or adjustment criteria.

At 820, a notification indicating a reduction in RAN connectivity is received from a RAN. This notification may be triggered when radio conditions experience sudden or abrupt changes in, for example, a cellular network such as a 5G or a 6G network. It should be understood, that the description is not limited to cellular networks and the following description may be applied equally to any network interface supporting an XR application. The reduction in RAN connectivity may be in the uplink, downlink or uplink and downlink directions. The reduction may be due to changes in the quality of a wireless connection and may also be due to capacity issues. Again, it should be appreciated that a reduction network conditions may occur with virtually any connected network.

These sudden changes in network connectivity may result in increased latency making it difficult or impracticable for a device or apparatus to process new roundtrip delay measurements. Thus, an XR application may not process roundtrip delay measurements. Therefore, the XR application may rely on configured adjustment criteria to determine an appropriate set of QoE object levels.

The adjustment criteria may include a set of QoE levels of objects used when the notification of a reduction in RAN connectivity is received. Examples may include a lowest QoE level (i.e., lowest processing delay) for all the objects of the scene, a lowest QoE level (i.e., lowest processing delay) for the objects located above a configured viewing distance threshold, or a lowest QoE level (i.e., lowest processing delay) for the objects having a screen coverage below a configured screen coverage threshold. The above examples may be used alone or in any combination.

In addition, the adjustment criteria may include another set of QoE levels of objects used when a recovery of conditions/capacity is determined by the device or XR application or notified by the RAN. Examples may include, a highest QoE level (i.e., highest processing delay) for all the objects of the scene, a highest QoE level (i.e., highest processing delay) for the objects located below a configured viewing distance threshold, and a highest QoE level (i.e., highest processing delay) for the objects having a screen coverage above a configured screen coverage threshold. The above examples may be used alone or in any combination.

In an alternative embodiment, the adjustment criteria may include one or more values to decrease the QoE levels of objects when the notification of a reduction in RAN connectivity is received, and one or more values to increase the QoE levels of objects when a recovery of conditions/capacity is determined or notified by the RAN. The one or more values may be a relative value, for example +/- 1, +/- 2, +/- 3, +/- 4 etc. The one or more values to decrease or increase the QoE levels of objects may be the same or different.

In an example embodiment, the one or more values to decrease or increase the QoE levels of objects may correspond with the severity of reduction in RAN connectivity. For example, in a case where the reduction in RAN connectivity is more severe, the relative value to decrease the QoE levels of objects may be larger than a relative value to decrease the QoE levels of objects in a case where the reduction in RAN connectivity is less severe.

At 860, the method includes determining the set of QoE levels of objects based on the configured adjustment criteria. When the notification from the RAN is received, a current measurement is reset, for example, a time window or number of samples stored before reception of the notification. The device hosting the hosting the XR application may adapt the XR scene itself. Once the device hosting the XR application determines that the RAN connectivity is restored to an acceptable level, the device hosting the XR application and an application server may resolve their the current QoE levels of objects. That is, since the device hosting the XR application is determining the set of QoE levels of objects while there is a reduction in RAN connectivity, once RAN connectivity is restored, the device hosting the hosting the XR application and the application server will need to resolve any differences in their current QoE levels of objects.

In an embodiment, the configured adjustment criteria may include a prohibit-timer. The prohibit-timer may have a preconfigured active duration. The active duration being a timer value that may be initiated when the notification from the RAN is received. While active, this timer inhibits changes to the QoE levels of objects that would occur through roundtrip delay QoE measurements. The prohibit-timer may be restarted if another notification from the RAN is received before expiration of the active duration.

A device hosting the XR application may determine that RAN connectivity is restored to an acceptable level by receiving a message from the RAN indicating that RAN connectivity is restored to an acceptable level, or the device\XR application may determine that RAN connectivity is restored based on a measurement of one or more signals received from the RAN.

The configured roundtrip delay adjustment mechanism at 810 may include adjustment strategy information. The adjustment strategy information may include an initial set of QoE levels per object to be used at the beginning of the XR session for the first rendering frames, an adjustment criteria information, and adjustment determination information.

In a case where the device hosting the XR application determines RAN connectivity is restored to an acceptable level and a prohibit-timer is not active, or in a case where a notification from a RAN indicating a reduction in RAN connectivity is not received at 820, at 830 method 800 determines the measured roundtrip delay. At 840, if the roundtrip delay is determined to inside the measured range, the method restarts.

If it determined that the roundtrip delay is not inside the configured range, at 850, the method includes determining if the stored QoE map value meets the target roundtrip delay. If the stored QoE map value meets the target roundtrip delay, method 800 includes selecting the related set of object QoE levels at 870 before restarting method 800. If the stored QoE map value does not meet the target roundtrip delay, method 800 includes determining the set of object QoE levels based on the configured adjustment criteria at 860 before restarting method 800.

To check if there is a stored delay value in the QoE map which meets the target roundtrip delay at 850 method 800 may iterate on each element of the QoE map to find a delay value (DtoFind) that satisfies Equation 1, where Equation 1: $DtoFind = Dtarget - Dmeasured + Dcurrent$ where DtoFind corresponds to the stored task processing delay value to be found, Dtarget corresponds to the target roundtrip delay to meet, Dmeasured corresponds to the measured roundtrip delay, and Dcurrent corresponds to the current task processing delay value.

By considering the acceptable configured roundtrip delay range, the task processing delay value to be found (DtoFind) may satisfy Equation 2, where Equation 2: $Dmin - Dmeasured + Dcurrent < DtoFind < Dmax - Dmeasured + Dcurrent$ where Dmin corresponds to the minimum acceptable roundtrip delay, and Dmax corresponds to the maximum acceptable roundtrip delay.

In the case where several sets of QoE levels exhibit the same processing delay, or substantially the same processing delay, or almost the same processing delay, the method may select the set of QoE levels providing the best (i.e., higher) QoE level for the closer object. This selection may be derived from the adjustment criteria information provided during the configuration step. The method may consider the QoE level dependency information provided during the configuration step when selecting the set of QoE levels.

The configuration data of the adjustment mechanism may be provided in a XR scene description format such as gITF.

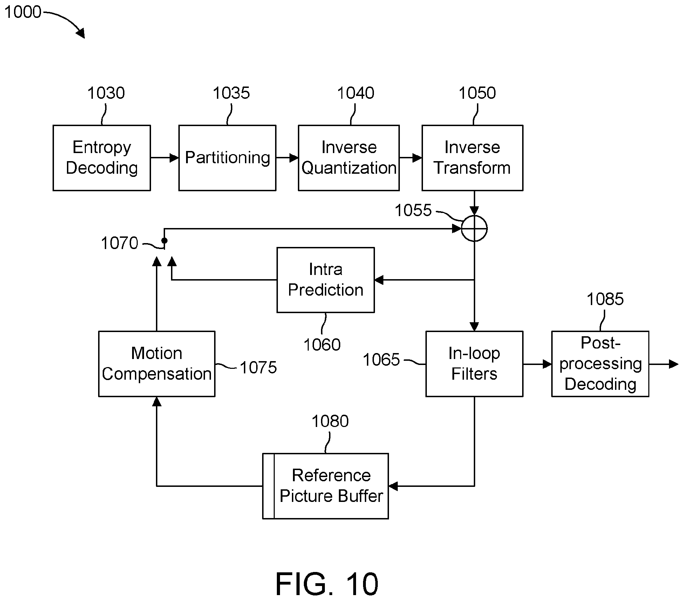

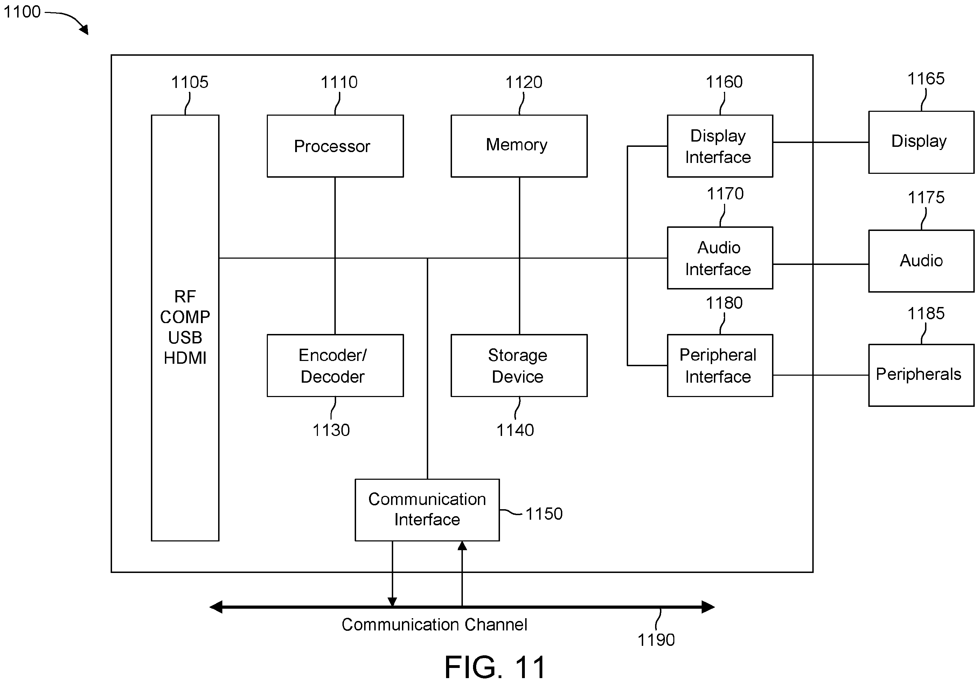

Various methods and other aspects described in this application can be used to modify modules, for example, the motion compensation (1070, 1175), motion estimation (1075), entropy coding, intra (1060, 1160) and/or decoding modules (1045, 1130), of a video encoder 1000 and decoder 1100 as shown in FIG. 10 and FIG. 11 . Moreover, the present aspects are not limited to WC or HEVC, and can be applied, for example, to other standards and recommendations, whether pre-existing or future-developed, and extensions of any such standards and recommendations (including WC and HEVC). Unless indicated otherwise, or technically precluded, the aspects described in this application can be used individually or in combination.

Various numeric values are used in the present application, for example. The specific values are for example purposes and the aspects described are not limited to these specific values.

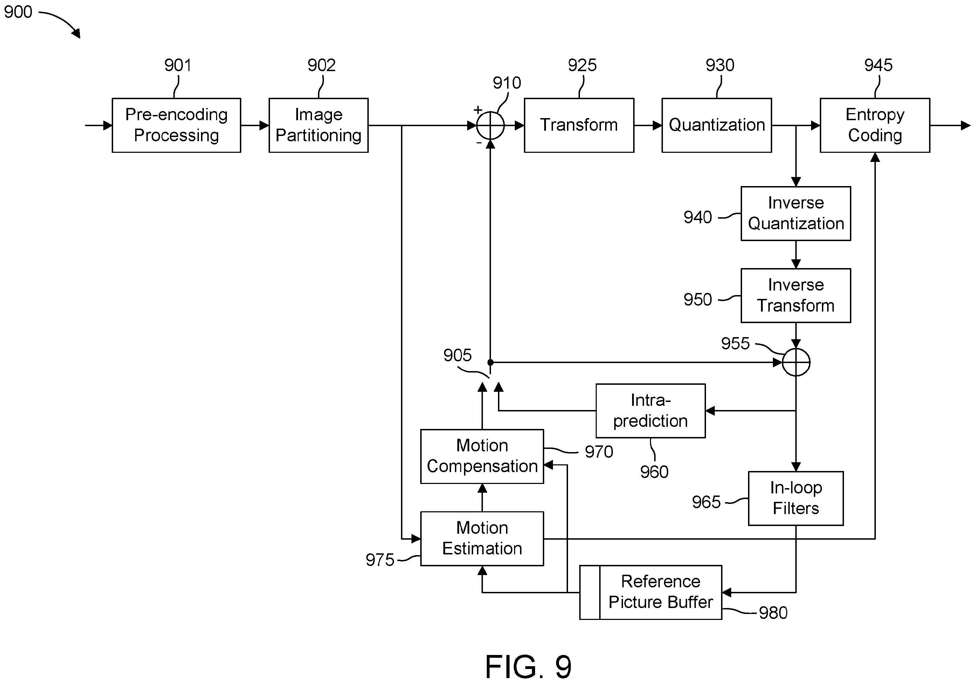

FIG. 9 illustrates an encoder 900. Variations of this encoder 900 are contemplated, but the encoder 900 is described below for purposes of clarity without describing all expected variations.

Before being encoded, the video sequence may go through pre-encoding processing (901), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 900, a picture is encoded by the encoder elements as described below. The picture to be encoded is partitioned (902) and processed in units of, for example, CUs. Each unit is encoded using, for example, either an intra or inter mode. When a unit is encoded in an intra mode, it performs intra prediction

(960). In an inter mode, motion estimation (975) and compensation (970) are performed. The encoder decides (905) which one of the intra mode or inter mode to use for encoding the unit, and indicates the intra/inter decision by, for example, a prediction mode flag. Prediction residuals are calculated, for example, by subtracting (910) the predicted block from the original image block.

The prediction residuals are then transformed (925) and quantized (930). The quantized transform coefficients, as well as motion vectors and other syntax elements, are entropy coded (945) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (940) and inverse transformed (950) to decode prediction residuals. Combining (955) the decoded prediction residuals and the predicted block, an image block is reconstructed. In-loop filters (965) are applied to the reconstructed picture to perform, for example, deblocking/SAO (Sample Adaptive Offset) filtering to reduce encoding artifacts. The filtered image is stored at a reference picture buffer (980).

FIG. 10 illustrates a block diagram of a video decoder 1000. In the decoder 1000, a bitstream is decoded by the decoder elements as described below. Video decoder 1000 generally performs a decoding pass reciprocal to the encoding pass as described in FIG. 9. The encoder 900 also generally performs video decoding as part of encoding video data.

In particular, the input of the decoder includes a video bitstream, which can be generated by video encoder 900. The bitstream is first entropy decoded (1030) to obtain transform coefficients, motion vectors, and other coded information. The picture partition information indicates how the picture is partitioned. The decoder may therefore divide (1035) the picture according to the decoded picture partitioning information. The transform coefficients are de-quantized (1040) and inverse transformed (1050) to decode the prediction residuals. Combining (1055) the decoded prediction residuals and the predicted block, an image block is reconstructed. The predicted block can be obtained (1070) from intra prediction (1060) or motion-compensated prediction (i.e., inter prediction) (1075). In-loop filters (1065) are applied to the reconstructed image. The filtered image is stored at a reference picture buffer (1080).

The decoded picture can further go through post-decoding processing (1085), for example, an inverse color transform (e.g. conversion from YCbCr 4:2:0 to RGB 4:4:4) or an inverse remapping performing the inverse of the remapping process performed in the pre-encoding processing (901). The post-decoding processing can use metadata derived in the pre-encoding processing and signaled in the bitstream.

FIG. 11 illustrates a block diagram of an example of a system in which various aspects and embodiments can be implemented. System 1100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1100, singly or in combination, may be embodied in a single integrated circuit, multiple ICs, and/or discrete components. For example, in at least one embodiment, the processing and encoder/decoder elements of system 1100 are distributed across multiple ICs and/or discrete components. In various embodiments, the system 1100 is communicatively coupled to other systems, or to other electronic devices, via, for example, a communications bus or through dedicated input and/or output ports. In various embodiments, the system 1100 is configured to implement one or more of the aspects described in this application.

The system 1100 includes at least one processor 1110 configured to execute instructions loaded therein for implementing, for example, the various aspects described in this application. Processor 1110 may include embedded memory, input output interface, and various other circuitries as known in the art. The system 1100 includes at least one memory 1120 (e.g., a volatile memory device, and/or a non-volatile memory device). System 1100 includes a storage device 1140, which may include non-volatile memory and/or volatile memory, including, but not limited to, EEPROM, ROM, PROM, RAM, DRAM, SRAM, flash, magnetic disk drive, and/or optical disk drive. The storage device 1140 may include an internal storage device, an attached storage device, and/or a network accessible storage device, as non-limiting examples.

System 1100 includes an encoder/decoder module 1130 configured, for example, to process data to provide an encoded video/3D object or decoded video/3D object, and the encoder/decoder module 1130 may include its own processor and memory. The encoder/decoder module 1130 represents module(s) that may be included in a device to perform the encoding and/or decoding functions. As is known, a device may include one or both of the encoding and decoding modules. Additionally, encoder/decoder module 1130 may be implemented as a separate element of system 1100 or may be incorporated within processor 1110 as a combination of hardware and software as known to those skilled in the art.

Program code to be loaded onto processor 1110 or encoder/decoder 1130 to perform the various aspects described in this application may be stored in storage device 1140 and subsequently loaded onto memory 1120 for execution by processor 1110. In accordance with various embodiments, one or more of processor 1110, memory 1120, storage device 1140, and encoder/decoder module 1130 may store one or more of various items during the performance of the processes described in this application. Such stored items may include, but are not limited to, the input video/3D object, the decoded video/3D object or portions of the decoded video/3D object, the bitstream, matrices, variables, and intermediate or final results from the processing of equations, formulas, operations, and operational logic.

In several embodiments, memory inside of the processor 1110 and/or the encoder/decoder module 1130 is used to store instructions and to provide working memory for processing that is needed during encoding or decoding. In other embodiments, however, a memory external to the processing device (for example, the processing device may be either the processor 1110 or the encoder/decoder module 1130) is used for one or more of these functions. The external memory may be the memory 1120 and/or the storage device 1140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for coding and decoding operations, such as for instance MPEG-2, HEVC, or VVC.

The input to the elements of system 1100 may be provided through various input devices as indicated in block 1105. Such input devices include, but are not limited to, (i) an RF portion that receives an RF signal transmitted, for example, over the air by a broadcaster, (ii) a composite input terminal, (iii) a USB input terminal, and/or (iv) an HDMI input terminal.

In various embodiments, the input devices of block 1105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 1200 to other electronic devices across USB and/or HDMI connections. It is to be understood that various aspects of input processing, for example, Reed-Solomon error correction, may be implemented, for example, within a separate input processing IC or within processor 1110 as necessary. Similarly, aspects of USB or HDMI interface processing may be implemented within separate interface ICs or within processor 1110 as necessary. The demodulated, error corrected, and demultiplexed stream is provided to various processing elements, including, for example, processor 1110, and encoder/decoder 1130 operating in combination with the memory and storage elements to process the data stream as necessary for presentation on an output device.

Various elements of system 1100 may be provided within an integrated housing, Within the integrated housing, the various elements may be interconnected and transmit data therebetween using a suitable connection arrangement, for example, an internal bus as known in the art, including the I2C bus, wiring, and printed circuit boards.

The system 1100 includes communication interface 1150 that enables communication with other devices via communication channel 1190. The communication interface 1150 may include, but is not limited to, a transceiver configured to transmit and to receive data over communication channel 1190. The communication interface 1150 may include, but is not limited to, a modem or network card and the communication channel 1190 may be implemented, for example, within a wired and/or a wireless medium.

Data is streamed to the system 1100, in various embodiments, using a Wi-Fi network such as IEEE 802.11 . The Wi-Fi signal of these embodiments is received over the communications channel 1190 and the communications interface 1150 which are adapted for Wi-Fi communications. The communications channel 1190 of these embodiments is typically connected to an access point or router that provides access to outside networks including the Internet for allowing streaming applications and other over-the-top communications. Other embodiments provide streamed data to the system 1100 using a set-top box that delivers the data over the HDMI connection of the input block 1105. Still other embodiments provide streamed data to the system 1100 using the RF connection of the input block 1105.

The system 1100 may provide an output signal to various output devices, including a display 1165, speakers 1175, and other peripheral devices 1185. The other peripheral devices 1185 include, in various examples of embodiments, one or more of a stand-alone DVR, a disk player, a stereo system, a lighting system, and other devices that provide a function based on the output of the system 1100. In various embodiments, control signals are communicated between the system 1100 and the display 1165, speakers 1175, or other peripheral devices 1185 using signaling such as AV.Link, CEC, or other communications protocols that enable device- to-device control with or without user intervention. The output devices may be communicatively coupled to system 1100 via dedicated connections through respective interfaces 1160, 1170, and 1180. Alternatively, the output devices may be connected to system 1100 using the communications channel 1190 via the communications interface 1150. The display 1165 and speakers 1175 may be integrated in a single unit with the other components of system 1100 in an electronic device, for example, a television. In various embodiments, the display interface 1160 includes a display driver, for example, a timing controller (T Con) chip.

The display 1165 and speaker 1175 may alternatively be separate from one or more of the other components, for example, if the RF portion of input 1105 is part of a separate set-top box. In various embodiments in which the display 1165 and speakers 1175 are external components, the output signal may be provided via dedicated output connections, including, for example, HDMI ports, USB ports, or COMP outputs.

As mentioned above, in many implementations of two-dimensional or three-dimensional environments, environmental details and/or objects or entities may be represented by point clouds or meshes of vertices and/or edges forming a large number of triangles or other shapes. For example, for three-dimensional virtual reality, augmented reality, or extended reality (VR, AR, or XR) environments, virtual objects within the environment may be represented as a mesh of triangles to represent the geometry of the object. In order to provide fine detail, the triangles or other shapes utilized in the mesh may be very small, with the mesh having a correspondingly large number of vertices and edges, potentially in the millions or billions of vertices for a complex object. This may require a correspondingly large amount of memory for storage and bandwidth for transmission. When used for three-dimensional video or animation, the problem is even worse: even a relatively simple environment with 1 million vertices, at 30 frames per second, may require a total bandwidth of 3.6 gigabits per second if uncompressed.

Different encoding and decoding standards and implementations have been proposed, including video-based point cloud compression (V-PCC), geometry-based point cloud compression (GPCC), and video-based dynamic mesh coding (V-DMC), promulgated by the Motion Picture Experts Group (MPEG); P11 dynamic mesh coding, developed by Apple Inc.; and others. A mesh may comprise one or more of the following features: a list of vertex positions; a topology defining the connection between the vertices, for instance a list of faces; and optionally photometric data, such as a texture map or color values associated with vertices or faces. The 3D mesh can be derived from a point cloud of the 3D object. The faces defined by connected vertices can be triangles or any other possible polygons or combinations of polygons. In many implementations, photometric data may be projected on texture map so that the texture map can be encoded as a video image.

In the present application, the terms "reconstructed" and "decoded" may be used interchangeably, the terms "encoded" or "coded" may be used interchangeably, the terms "pixel" or "sample" may be used interchangeably, and the terms "image," "picture" and "frame" may be used interchangeably. Usually, but not necessarily, the term "reconstructed" is used at the encoder side while "decoded" is used at the decoder side.

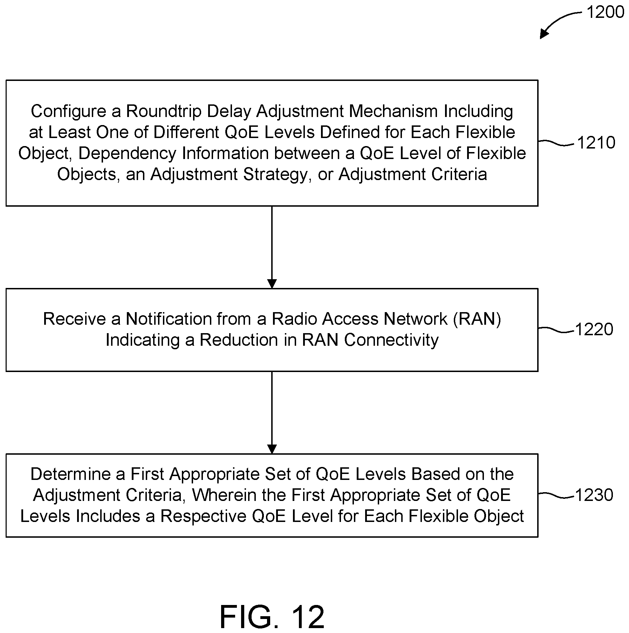

FIG. 12 illustrates a flowchart of an example process 1200 for adjusting roundtrip delays of an XR application. In some implementations, one or more process blocks of FIG. 12 may be performed by an apparatus hosting an XR application.

As shown in FIG. 12, process 1200 may include, at 1210, configuring a roundtrip delay adjustment mechanism including at least one of different QoE levels defined for each flexible object, dependency information between a QoE level of flexible objects, an adjustment strategy, or adjustment criteria. For example, an apparatus may configure a roundtrip delay adjustment mechanism including at least one of different QoE levels defined for each flexible object, dependency information between a QoE level of flexible objects, an adjustment strategy, or adjustment criteria, as described above. As also shown in FIG. 12, process 1200 may include, at 1220, receiving a notification from a Radio Access Network (RAN) indicating a reduction in RAN connectivity including RAN conditions or RAN capacity. For example, an apparatus may receive a notification from a RAN indicating a reduction in RAN connectivity, as described above. As further shown in FIG. 12, process 1200 may include, at 1230, determining a first appropriate set of QoE levels based on the adjustment criteria, where the first appropriate set of QoE levels includes a respective QoE level for each flexible object. For example, an apparatus may determine a first appropriate set of QoE levels based on the adjustment criteria, where the first appropriate set of QoE levels includes a respective QoE level for each flexible object, as described above.

Process 1200 may include additional implementations, such as any single implementation or any combination of implementations described below and/or in connection with one or more other processes described elsewhere herein. In a first implementation, process 1200 further includes determining the RAN connectivity is restored to an acceptable level.

In a second implementation, alone or in combination with the first implementation, the adjustment criteria includes: a first set of QoE levels of objects and a second set of QoE levels of objects, where the first appropriate set of QoE levels is at least one of the first set of QoE levels of objects or the second set of QoE levels of objects, and where the first set of QoE levels of objects is implemented when the notification from the RAN is received, and where the second set of QoE levels of objects is implemented when determining RAN connectivity is restored to an acceptable level.

In a third implementation, alone or in combination with the first and second implementation, process 1200 may include decreasing QoE levels of objects by a first preconfigured value when the notification from the RAN indicating the reduction in RAN connectivity is received, and increasing the QoE level of objects by a second preconfigured value when determining RAN connectivity is returned to an acceptable level, where the first preconfigured value and the second preconfigured value are the same or distinct.

In a fourth implementation, alone or in combination with one or more of the first through third implementations, process 1200 further includes reconciling current QoE levels of objects at an apparatus hosting the XR application with QoE levels of objects hosted on an application server upon determining the RAN connectivity is restored to an acceptable level.

In a fifth implementation, alone or in combination with one or more of the first through fourth implementations, the roundtrip delay adjustment mechanism includes a prohibit timer indicating an active duration, and where the active duration is a time value during which changes to QoE levels of objects based on round trip delay measurements are prohibited after the notification from the RAN is received and the prohibit timer is activated.

In a sixth implementation, alone or in combination with one or more of the first through fifth implementations, process 1200 further includes measuring at least one roundtrip delay and at least one elementary task processing delay including calculating the at least one roundtrip delay based on several samples after determining RAN connectivity is returned to an acceptable level or upon expiration of the prohibit timer; and determining a second appropriate set of QoE levels based on a QoE map and the configured roundtrip delay adjustment mechanism.

Although FIG. 12 shows example blocks of process 1200, in some implementations, process 1200 may include additional blocks, fewer blocks, different blocks, or differently arranged blocks than those depicted in FIG. 12. Additionally, or alternatively, two or more of the blocks of process 1200 may be performed in parallel.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Moreover, the present aspects are not limited to V-PCC, G-PCC, P11, or V-DMC, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways.

For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method for adjusting roundtrip delays of an extended reality (XR) application while maintaining an acceptable quality of experience (QoE), the method comprising:
configuring a roundtrip delay adjustment mechanism including at least one of different QoE levels defined for each flexible object, dependency information between a QoE level of flexible objects, an adjustment strategy, or adjustment criteria;
receiving a notification from a Radio Access Network (RAN) indicating a reduction in RAN connectivity; and
determining a first appropriate set of QoE levels based on the adjustment criteria, wherein the first appropriate set of QoE levels includes a respective QoE level for each flexible object.

2. The method of claim 1, further comprising: determining the RAN connectivity is restored to an acceptable level.

3. The method of claim 1, wherein the roundtrip delay adjustment mechanism includes a prohibit timer indicating an active duration, and wherein the active duration is a time value during which changes to QoE levels of objects based on round trip delay measurements are prohibited after the notification from the RAN is received and the prohibit timer is activated.

4. The method of claim 2, wherein the adjustment criteria includes: a first set of QoE levels of objects and a second set of QoE levels of objects, wherein the first appropriate set of QoE levels is at least one of the first set of QoE levels of objects or the second set of QoE levels of objects, and wherein the first set of QoE levels of objects is implemented when the notification from the RAN is received, and wherein the second set of QoE levels of objects is implemented when determining RAN connectivity is restored to an acceptable level.

5. The method of claim 2, further comprising decreasing QoE levels of objects by a first preconfigured value when the notification from the RAN indicating the reduction in RAN connectivity is received, and increasing the QoE level of objects by a second preconfigured value when determining RAN connectivity is returned to an acceptable level, wherein the first preconfigured value and the second preconfigured value are the same or distinct.

6. The method of claim 2, further comprising: reconciling current QoE levels of objects at a device hosting the XR application with QoE levels of objects hosted on an application server upon determining the RAN connectivity is restored to an acceptable level.

7. The method of claim 3, further comprising:
measuring at least one roundtrip delay and at least one elementary task processing delay including calculating the at least one roundtrip delay based on several samples after determining RAN connectivity is returned to an acceptable level or upon expiration of the prohibit timer; and
determining a second appropriate set of QoE levels based on a QoE map and the configured roundtrip delay adjustment mechanism.

8. An apparatus hosting extended reality (XR) application, the apparatus comprising:
a transceiver; and
processor circuitry operatively coupled to the transceiver and configured to adjust a configured roundtrip delay adjustment mechanism, the configured roundtrip delay adjustment mechanism including at least one of different QoE levels defined for each flexible object, dependency information between a QoE level of flexible objects, an adjustment strategy, or adjustment criteria;
the transceiver configured to receive a notification from a Radio Access Network (RAN) indicating a reduction in RAN connectivity; and
the processor circuitry configured to determine a first appropriate set of QoE levels based on the adjustment criteria, wherein the appropriate set of QoE levels includes a respective QoE level for each flexible object.

9. The apparatus of claim 8, wherein the processor circuitry is configured to determine the RAN connectivity is restored to an acceptable level.

10. The apparatus of claim 8, wherein the roundtrip delay adjustment mechanism includes a prohibit timer indicating an active duration, and wherein the active duration is a time value during which changes to QoE levels of objects based on round trip delay measurements are prohibited after the notification from the RAN is received and the prohibit timer is activated.

11. The apparatus of claim 9, wherein the adjustment criteria includes: a first set of QoE levels of objects and a second set of QoE levels of objects, wherein the first appropriate set of QoE levels is at least one of the first set of QoE levels of objects or the second set of QoE levels of objects, and wherein the first set of QoE levels of objects is implemented when the transceiver receives the notification from the RAN, and wherein the second set of QoE levels of objects is implemented when the processor circuitry determines the RAN connectivity is restored to an acceptable level.

12. The apparatus of claim 8, wherein the processor circuitry is further configured to decrease QoE levels of objects by a first preconfigured value when the notification from the RAN is received, and increase the QoE levels of objects by a second preconfigured value when determining RAN connectivity is returned to an acceptable level, and wherein the first preconfigured value and the second preconfigured value are the same or distinct.

13. The apparatus of claim 8, wherein the processor circuitry is further configured to resolve current QoE levels of objects with QoE levels of objects hosted on an application server upon determining the RAN connectivity is restored to an acceptable level.

14. The apparatus of claim 10, wherein the processor circuitry is further configured to measure at least one roundtrip delay and at least one elementary task processing delay including calculating the at least one roundtrip delay based on several samples after determining RAN connectivity is returned to an acceptable level or upon expiration of the prohibit timer; and
determine a second appropriate set of QoE levels based on a QoE map and the configured roundtrip delay adjustment mechanism.
